# FASCICULE DE BREVET EUROPEEN

(11) **EP 3 860 793 B1**
(45) Date de publication et mention de la délivrance du brevet: **12.06.2024**
(21) Numéro de dépôt: 19795293.0
(22) Date de dépôt: 01.10.2019
(51) Int. Cl.: B23K 9/028, B23K 37/053, B23K 101/06, B23K 101/10

(54) **DISPOSITIF INTÉRIEUR DE SERRAGE ET DE SOUDAGE**
INNERE SPANN- UND SCHWEISSVORRICHTUNG
INTERNAL WELDING AND CLAMPING DEVICE

(30) Priorité: 02.10.2018 FR 1859132
(43) Date de publication de la demande: 11.08.2021
(73) Titulaire: Serimax Holdings, 95700 Roissy-en-France (FR)
(72) Inventeur: BELLANGER, Guy, 92100 Boulogne-Billancourt (FR)
(74) Mandataire: Casalonga
(86) Numéro de dépôt international: PCT/FR2019/052320
(87) Numéro de publication internationale: WO 2020/070436

(56) Documents cités:
- WO-A1-2016/153562
- FR-A1- 2 727 643
- FR-A2- 2 485 974
- JP-A- S5 536 011
- US-A- 4 306 134
- US-A1- 2009 230 104

## Description

L'invention se rapporte à un dispositif intérieur de serrage et de soudage de tubes disposés bout à bout (en anglais « internal line-up welding clamp »), voir par exemple JP S55 36011 A. L'invention trouve plus particulièrement son application dans le domaine des constructions de canalisations métalliques du type pipeline généralement utilisées pour l'acheminement de gaz, pétrole ou d'autres produits de l'industrie du pétrole. En particulier, elle concerne les canalisations construites sur terre. L'invention peut aussi être utile pour l'adduction d'eau.

La construction de canalisations métalliques consiste à souder circonférentiellement les extrémités distales de tubes présentés en vis-à-vis. Les extrémités distales des tubes sont préalablement usinées par des équipements qui permettent la formation d'un chanfrein sur l'extrémité distale, ce chanfrein est défini dans un plan « presque parfait » mais qui ne l'est jamais. En pratique ce plan défini par le bord du chanfrein a systématiquement une légère inclinaison par rapport à l'axe longitudinal du tube appelé « défaut d'équerrage », il peut également présenter des défauts de planéité de l'ordre du dixièmes de millimètres étant donnée la précision des chanfreineuses actuelles.

Pour les souder, les tubes ainsi préparés sont présentés dans l'alignement les uns des autres et disposés de telle sorte que leurs extrémités distales soient alignées et présentées le plus près, voire au contact, l'une de l'autre afin de limiter le volume de la jonction par soudure. Pour optimiser le soudage, il est important de maintenir fixement les tubes alignés et centrés pendant l'opération de soudage.

Le soudage peut se réaliser depuis l'extérieur. Dans ce cas, des plaquettes peuvent être placées à l'intérieur des tubes, au droit de la jonction desdits tubes, pour éviter que le bain de fusion déposé dans ladite jonction s'effondre à l'intérieur de la canalisation. Les documents US-6915943 et US-5356067 présentent des exemples de dispositifs intérieurs de serrage mis en oeuvre lors de la formation de la soudure depuis l'extérieur.

Les constructeurs de pipeline cherchent des solutions alternatives à cette technologie pour suivre l'évolution des spécifications des clients, notamment en matière de productivité. Pour s'affranchir de l'usage de ces plaquettes, il est connu de souder les extrémités des tubes par l'intérieur, afin de joindre bord à bord les extrémités distales des tubes sur toute leur circonférence en réalisant une première soudure interne. Une fois cette première soudure interne, ou racine « root pass », réalisée, une soudure depuis l'extérieur avec un deuxième équipement peut être réalisée de manière conventionnelle, la soudure interne faisant office de support pour la soudure externe.

Notamment, dans l'état de la technique, on connaît un dispositif de soudage, par l'intérieur, de tubes disposés bout à bout, du type comportant un châssis supportant des moyens d'avancement dudit dispositif dans les tubes, ledit châssis comprenant un châssis avant et un châssis arrière reliés par un arbre, un premier moyen de serrage disposé à l'avant du châssis arrière et destiné à coopérer avec l'extrémité d'un premier tube afin de centrer et immobiliser longitudinalement ledit dispositif par rapport au premier tube, un deuxième moyen de serrage disposé à l'arrière du châssis avant et destiné à coopérer avec l'extrémité d'un deuxième tube afin de maintenir les deux tubes bout à bout pendant au moins l'opération de soudage, et un dispositif de soudage comprenant une couronne tournante disposée entre le premier moyen de serrage et le deuxième moyen de serrage, et au moins une torche de soudage portée par ladite couronne tournante et disposée approximativement dans le plan de joint des deux tubes à souder au moins pendant l'opération de soudage, des moyens d'alignement susceptibles de coopérer avec la face d'extrémité dudit premier tube afin de positionner ladite torche approximativement dans le plan de joint, des moyens pour alimenter ladite torche en électricité, gaz de protection et éventuellement métal d'apport, et des moyens de commande dudit dispositif.

De tels dispositifs sont connus notamment par les documents US-3 461 264 et US-3 612 808 qui prévoient un certain degré de liberté entre le châssis arrière et le premier moyen de serrage, afin de permettre un alignement entre un plan de serrage défini par le premier moyen de serrage et le plan de joint, les moyens d'alignement coopérant alors avec la face d'extrémité du premier tube.

Dans tous ces dispositifs, les moyens qui autorisent le degré de liberté mentionné ci-dessus sont éloignés du plan de joint des deux tubes.

L'alignement des axes s'opère en deux phases, la première phase consiste à disposer l'axe géométrique des moyens de serrage, celui autour duquel chaque piston du moyen de serrage se déploie radialement, perpendiculairement au plan de joint défini par la face d'extrémité du premier tube, et la deuxième phase consiste à déplacer radialement l'axe géométrique des moyens de serrage afin qu'il se confonde avec la perpendiculaire au plan de joint qui passe par l'axe géométrique du premier tube. La première phase s'obtient par déploiement vers l'extérieur des moyens d'alignement et mise en butée des moyens d'alignement sur la face d'extrémité du premier tube par recul du dispositif dans le premier tube. La deuxième phase s'obtient par actionnement des moyens de serrage du premier moyen de serrage.

Le document FR-2 727 643 enseigne une solution alternative pour le soudage intérieur dans laquelle le premier moyen de serrage, le deuxième moyen de serrage et le dispositif de soudage sont portés tous ensemble par un moyeu entourant un arbre reliant le châssis arrière et le châssis avant, ledit moyeu étant supporté par ledit arbre par l'intermédiaire d'une rotule disposée sensiblement dans le plan de la couronne tournante.

Dans ces dispositifs connus, il se produit inévitablement un déplacement radial pendant la première phase. Lors de la deuxième phase, il se produit également un déplacement radial et un ripage des moyens d'alignement relativement à la face d'extrémité du premier tube. A la fin de la deuxième phase, on observe un déséquilibre dans la distribution des forces exercées par chacun des pistons. Le dispositif selon le document FR-2 727 643 permet de limiter les phénomènes de ripage, mais contribue à une détérioration du centrage de l'axe géométrique du premier moyen de serrage sur l'axe géométrique du premier tube. De facto, avec un tel dispositif, les problèmes dits de « hi-lo », à savoir le problème lié à l'existence de décalage entre faces d'extrémité de tubes est augmenté.

On connaît du document US-4 306 134 (formant la base pour la préambule de la revendication 1) un dispositif intérieur de serrage et de soudage qui permet d'orienter la torche de façon à ce qu'elle puisse être disposée de manière oblique relativement au plan de joint. Des vis permettent de figer l'oblique de l'orientation de la tête de soudage. Pendant la soudure circonférentielle, l'oblique de la torche reste identique relativement au plan de joint. La torche de soudage est également entraînée en oscillation pour produire un bain de soudage large entre les deux extrémités de tubes.

Enfin, ce type de dispositif étant très lourd (de l'ordre de plusieurs tonnes), il nécessite la mise en oeuvre de moyens de levage spécifiques. De même les tubes sont également lourds. Lorsque le deuxième tube est approché, lui aussi au moyen d'un outil de levage, afin d'être placé en regard du premier tube, il est nécessaire que la partie proéminente du châssis avant soit insérée dans ledit deuxième tube. En pratique, la précision des outils de levage et manutention des tubes, comme de déplacement des dispositifs de serrage et soudage ne permet pas une précision absolue. Il arrive dès lors très fréquemment que l'amenée du deuxième tube conduise à l'exercice d'efforts sur le châssis avant, et notamment sur le premier moyen de serrage. De telles contraintes vont affecter la position préalablement réglée du moyeu portant ensemble le premier moyen de serrage, le deuxième moyen de serrage et le dispositif de soudage. Lorsque le deuxième tube est enfin dans une position acceptable en regard du premier tube, il n'est dès lors plus possible de savoir quelle est la position de la tête de soudage relativement à l'extrémité distale du premier tube, au regard des différents chocs transmis au dispositif intérieur.

Dès lors il existe un besoin pour faciliter la mise en place du deuxième tube, qui permette de maintenir l'ajustement de position de la tête de soudage y compris lorsque des chocs sont réalisés sur le dispositif par le deuxième tube.

Par ailleurs, du fait de l'existence de défaut de circularité quasi systématique sur les tubes, et l'existence de cas dits de « fausse coupe », à savoir les cas où la face d'extrémité du premier tube n'est pas parfaitement perpendiculaire à l'axe longitudinal dudit tube, il a été depuis identifié un besoin pour augmenter la compatibilité des tubes mis bout à bout.

Il a également été identifié un besoin pour des dispositifs capable d'augmenter leur tolérance vis-à-vis des problèmes de « hi-lo », tout en assurant un cordon de soudure efficace et complet. Un cordon de soudure efficace assure une obturation complète de l'espace à souder entre lesdites faces d'extrémité. En effet, le travail d'appairage des tubes par rotation du deuxième tube mis en regard du premier tube étant fastidieux, il a été identifié le besoin de limiter les décalages entre ces faces d'extrémité.

Il a également été identifié un besoin pour améliorer la géométrie intérieure du cordon de soudure afin d'améliorer leur résistance à la fatigue, et notamment limiter les variations locales de la section intérieure des tubes afin d'éviter les risques de cavitation.

L'objet de la présente invention est de permettre le maintien de la coaxialité du dispositif, et plus particulièrement des axes de déploiement des deux moyens de serrage avec l'axe de symétrie du premier tube, tout en conférant un degré de liberté à la tête de soudage relativement à cet axe de symétrie, le degré de liberté étant conféré par un pivot apte à incliner la tête de soudage pour caler l'alignement de la tête de soudage avec le plan de la face avant d'extrémité indépendamment du premier moyen de serrage. L'invention peut également permettre un mouvement de translation du pivot le long de l'axe longitudinal du dispositif en ayant une course utile entre les deux moyens de serrage.

L'objet de l'invention permet de supporter des contraintes exercées par l'amenée du deuxième tube pouvant aller jusqu'à 20 voire 30 à 40 tonnes axiales et 40 tonnes radiales.

L'invention a pour objet de proposer une solution technique au problème ci-dessus en proposant un dispositif intérieur de serrage et de soudage pour la jonction de tubes par leurs extrémités distales, le dispositif comportant
- un support comportant un premier moyen de serrage pour coopérer avec la surface intérieure d'un premier tube, et un deuxième moyen de serrage pour coopérer avec la surface intérieure d'un deuxième tube,
- une tête de soudage montée mobile en rotation autour du support, de manière à permettre une soudure sur au moins une portion de circonférence interne d'une zone de jonction formée entre le premier tube et le deuxième tube;
- un pivot tel que la tête de soudage est inclinable par rapport à l'axe longitudinal du dispositif, le pivot étant tel que la tête de soudage est inclinable par rapport à un plan de serrage du premier moyen de serrage. En particulier, la tête de soudage est entraînée en rotation dans un plan, ce plan étant inclinable par rapport à l'axe longitudinal du dispositif. Cela signifie que pendant la réalisation de la trajectoire circonférentielle autour du support, la tête de soudage reste dans un même plan. La tête de soudage ne nécessite pas d'ajustement de l'inclinaison au cours du soudage. Un angle d'inclinaison de la tête de soudage relativement à l'axe longitudinal du premier tube reste à tout moment identique au cours du soudage.

De facto, l'invention permet de proposer une tête de soudage inclinable par rapport à un axe longitudinal du support, cet axe longitudinal du support pouvant se confondre avec l'axe longitudinal du dispositif, et ainsi être inclinable à l'identique de l'inclinaison d'une face d'extrémité du tube relativement à l'axe longitudinal du tube. L'invention permet également l'inclinaison de la trajectoire circulaire de la tête de soudage relativement au plan de serrage afin d'assurer une trajectoire pour la tête de soudage qui corresponde au mieux avec l'inclinaison de la face d'extrémité du tube. L'invention permet d'inscrire la trajectoire suivie par la tête de soudage dans un plan et de centrer ce plan sur un plan d'une extrémité distale du premier tube. Le plan dans lequel l'extrémité de la tête de soudage est entraînée en rotation peut ainsi être confondu avec le plan de l'extrémité distale de ce premier tube.

De préférence le pivot peut être localisé entre les deux moyens de serrage. Mieux, le pivot peur être dans le volume de la zone de jonction délimité latéralement par les deux faces d'extrémité distales mises bout à-bout du premier tube et du deuxième tube. Pour englober tous les cas, et notamment ceux où il y a un défaut de circularité du premier tube, on définit le cordon de soudure à former comme devant former une ellipse. De préférence la rotule est dans le plan de ladite ellipse, et mieux au barycentre de ladite ellipse, afin de minimiser les variations de distance entre la torche de soudage et la surface intérieure des tubes au cours du soudage circonférentiel.

Avec un dispositif selon l'invention, l'axe de rotation de la tête de soudage peut passer par le centre de l'ellipse, y compris lorsque l'ellipse est définie dans un plan incliné par rapport à l'axe longitudinal du tube (cas de la « fausse coupe »). En particulier le dispositif selon l'invention peut compenser des inclinaisons de la face d'extrémité du premier tube relativement à l'axe longitudinal du tube allant jusqu' à 0,5° ou 10 mm mesuré axialement.

Avec un dispositif selon l'invention, l'optimisation du positionnement de la tête de soudage par rapport aux « fausses coupes » peut être réalisée.

De plus, en cas d'impact sur la partie proéminente du dispositif, le premier moyen de serrage va absorber la contrainte tout en permettant une préservation de l'orientation de la tête de soudage initialement définie. La configuration et la manière dont le premier moyen de serrage est mis en place dans le premier tube va permettre d'augmenter la résistance au recul et donc au ripage d'un dispositif selon l'invention.

La tête de soudage est prévue pour être entraînée en rotation sur au moins un arc angulaire défini transversalement à un axe longitudinal du dispositif tout en conservant son orientation. Avec une telle configuration, pour des forces transmises au dispositif lors de l'accostage du deuxième tube allant jusqu'à 15 tonnes, le premier moyen de serrage permet de garantir la définition du référentiel utile pour le positionnement de la tête de soudage. Avec un tel choc, seule une composante d'accélération est transmise à la tête de soudage, mais pas les efforts, car la tête de soudage selon l'invention est indépendante du premier moyen de serrage.

En particulier la torche de soudage peut être une torche de soudage à l'arc. Une torche de soudage à l'arc comporte un fil électrode à dévidage continu et une électrode qui émet un arc électrique sur le fil afin de produire un bain de fusion au niveau d'un point d'impact déterminé. Cette électrode est animée d'un mouvement d'oscillation, l'oscillation étant telle que l'électrode au repos est dans le plan de l'extrémité distale du premier tube, qui est également le plan dans lequel est située la torche de soudage. L'oscillation de l'électrode est choisie symétrique de part et d'autre de ce plan. Une amplitude d'oscillation de l'électrode d'une torche selon l'invention peut être réduite à une valeur inférieure à 3 mm d'amplitude, car l'oscillation a pour objectif de combler les seuls écarts radiaux et ou axiaux inférieurs à 1 mm, de préférence inférieur à 0,5 mm, entre les tubes.

Ainsi un bain de fusion où le fil métallique d'apport est fondu va créer un cordon de soudure. Le point d'impact de l'arc électrique produit par l'électrode suit donc une sinusoïde centrée sur le plan de joint. Le point d'impact de soudure est choisi dans la zone de jonction définie entre les deux tubes mis en regard. Grâce à l'invention, la trajectoire des points d'impact est centrée sur le plan de joint lorsque la tête de soudage est entraînée en rotation, ce plan de centrage des points d'impact étant le plan de la première extrémité du premier tube. En particulier, lors de l'entraînement en rotation de la torche de soudage, le corps de la torche va rester dans un même plan, et ainsi permettre la réalisation d'un cordon de soudure uniquement dans le chanfrein des deux tubes, sans risque de diminution locale du diamètre intérieur des tubes.

En particulier, les extrémités distales des deux tubes sont toutes les deux chanfreinées de sorte que le cordon de soudure à réaliser présente une épaisseur inférieure à l'épaisseur du tube.

De préférence, la tête de soudage comporte plusieurs, en particulier au moins quatre, et par exemple huit, cassettes de soudage distinctes réparties sur la circonférence d'une couronne, chaque cassette pouvant exécuter un programme de soudage propre et spécifique à une portion angulaire de la circonférence du joint à réaliser. De préférence, toutes les cassettes effectuent le même programme de soudage. En fonction de la compacité radiale requise par le diamètre intérieur des tubes à souder, on peut par exemple prévoir 6 cassettes de soudage distinctes réparties sur la circonférence d'une couronne d'un dispositif selon l'invention pour réaliser des soudures dans un tube de 91,5 cm (36 pouces) de diamètre extérieur, pour des épaisseurs nominales de paroi de tubes comprises entre 8,5 et 27 mm.

De préférence les cassettes sont réparties sur une même couronne de sorte qu'une unique motorisation permet d'entraîner l'ensemble des cassettes de la tête de soudage simultanément.

Chaque cassette peut être programmée pour couvrir un arc angulaire se recouvrant en partie avec l'arc angulaire couvert par une cassette adjacente. Selon l'invention, lors de l'entraînement en rotation de la tête de soudage, chacune des cassettes de soudage effectue une trajectoire dans un plan, ce plan étant le même pour chacune des cassettes, et étant superposé au plan de l'extrémité distale du premier tube.

En particulier, lorsqu'il y a plusieurs cassettes de soudage, chacune des cassettes permet un soudage à l'arc de telle sorte que les électrodes de chacune de ces cassettes sont disposées dans un même plan.

Avantageusement le pivot peut être mobile axialement entre les deux moyens de serrage. Ainsi, le pivot peut être disposé dans une position de garage pendant les opérations de mise en place du premier moyen de serrage en coopération avec la paroi intérieure du premier tube, et c'est seulement dans un deuxième temps, qu'il est translaté de manière à pouvoir être disposé au droit du plan de joint.

Par exemple, le pivot peut être obtenu par une rotule, la rotule comportant une rotule femelle et une rotule mâle en coopération de forme avec une rotule femelle. En particulier, une surface extérieure de la rotule mâle est de courbure complémentaire à celle d'une surface intérieure de la rotule femelle. Par exemple, la surface extérieure présente une surface convexe et la surface intérieure une surface concave, telles qu'un rayon de courbure considéré dans une section longitudinale desdites surfaces courbes, respectivement concave et convexe, est compris entre 500 mm et 1000 mm, par exemple de l'ordre de 700 mm lorsque le dispositif est configuré pour être inséré dans des tubes de 1,22 mètres (48 pouces) de diamètre extérieur. La rotule femelle est reliée à une couronne de la tête de soudage, tandis que la rotule mâle est présentée par le support.

De manière optimisée, la couronne peut comporter un moyen d'engrènement sur une portion seulement de sa circonférence intérieure pour coopérer avec un pignon denté porté par la rotule femelle. La couronne est ainsi entraînée en rotation par ce pignon denté motorisé. La rotation de la couronne relativement à la rotule femelle peut être facilitée par des galets de roulement, par exemple équirépartis, à une interface entre la couronne et la rotule femelle. La motorisation en rotation peut aussi être assurée par d'autres moyens tel qu'un « moteur couple » directement intégré dans la couronne.

Alternativement, le pivot pourrait également être obtenu au moyen d'un dispositif de type « Hexapode », qui permet de créer le point de pivot équivalent. Un dispositif de type « Hexapode » peut être fixé à l'extérieur du volume délimité par les deux moyens de serrage.

Avantageusement, le dispositif peut comporter des moyens d'identification de l'inclinaison d'un plan défini par l'extrémité distale du premier tube. Le dispositif peut également comporter des moyens d'indexation de l'inclinaison de la tête de soudage relativement à un plan d'inclinaison de l'extrémité distale du premier tube, les moyens d'indexation pouvant notamment coopérer par butée mécanique directe contre les moyens d'identification de l'inclinaison. Alternativement, les moyens d'indexation de l'inclinaison de la tête de soudage peuvent coopérer directement avec l'extrémité distale du premier tube.

De préférence, les moyens d'indexation sont solidaires de la tête de soudage. Avantageusement, les moyens d'indexation peuvent comporter des moyens de blocage en position afin de maintenir la position de la tête de soudage identifiée comme alignée avec le plan de l'extrémité distale du premier tube.

Par exemple, les moyens d'indexation peuvent comporter des doigts indexeurs portés par la couronne, ces doigts indexeurs pouvant être amenés au contact d'une béquille et de butées hautes des moyens d'identification de l'inclinaison.

De préférence, le dispositif peut comporter des moyens propres d'ajustement de la coaxialité du dispositif dans le premier tube. Le premier moyen de serrage peut assurer la concentricité du dispositif dans le premier tube. De préférence, le deuxième moyen de serrage permet d'assurer l'alignement du deuxième tube avec le premier tube.

En particulier, chaque moyen de serrage peut comporter respectivement une pluralité de pistons, par exemple chacun 24 pistons, chaque piston pouvant exercer une poussée radiale supérieure à 10 tonnes, et par exemple de l'ordre de 15 tonnes. Le déplacement des pistons peut notamment se faire de manière synchronisée et homothétique, de telle sorte que les extrémités de chaque pistons se déplacent selon des cercles concentriques. Avec de telles forces, le moyen de serrage permet en partie d'assurer la mise au rond de la portion de tube contre laquelle il est radialement en appui.

Les premiers et deuxièmes moyens de serrage peuvent être proches et notamment espacés axialement le long de l'axe longitudinal des tubes de telle sorte qu'ils sont à moins de 400 mm, notamment à moins de 300 mm de distance axiale. Une telle configuration permet une grande compacité axiale, et également un positionnement de chacun des moyens de serrage au plus proche de la zone de jonction formée entre le premier et le deuxième tube. Une telle configuration permet de recirculariser des tubes qui ont des défauts de circularité partielle, notamment du fait de leur structure : tubes soudés longitudinalement ou en spirale.

L'invention a également pour objet un procédé de soudage selon la revendication 16.

De préférence, on peut obtenir la translation de la couronne par des appuis latéraux sur une rotule femelle du pivot entraînant une coulisse d'une rotule mâle du pivot sur des barres de coulisses.

En particulier, après le blocage en position longitudinale et inclinée de la couronne relativement au plan P1, et avant l'amenée du deuxième tube, la béquille et les deux butées hautes télescopiques peuvent être rétractées dans le premier tube.

La présente invention sera mieux comprise à l'étude de la description détaillée d'un mode de réalisation pris à titre d'exemple nullement limitatif et illustré par des dessins annexés, sur lesquels :
- la figure 1 est une vue en perspective d'un dispositif selon l'invention dans un premier tube ;
- la figure 2 est une vue schématisée en coupe longitudinale d'un dispositif selon l'invention ;
- la figure 3 est une vue en coupe transversale selon le plan de coupe III-III identifié sur la figure 1 d'un dispositif selon l'invention ;
- la figure 4 est une vue en perspective d'une rotule femelle d'un dispositif selon l'invention ;
- la Figure 5 est une vue coupe longitudinale schématisée d'une partie d'une rotule selon l'invention correspondant à un plan de coupe VI-VI présenté Figure 3 ;
- la Figure 6 est une vue de profil latéral d'une partie du dispositif selon l'invention permettant de visualiser les moyens d'indexation de l'inclinaison de la tête de soudage d'un dispositif selon l'invention, la partie représentée n'incluant pas la tête de soudage ;
- les figures 7 à 10 représentent des vues schématisée en coupe longitudinale, selon un plan de coupe brisée ABC tel que représenté sur la figure 2, d'un dispositif selon l'invention au cours de sa mise en place dans un premier tube, puis avec le deuxième tube présenté en vis-à-vis ;
- la Figure 11 est une vue coupe longitudinale schématisée d'une partie d'une rotule selon l'invention correspondant à un plan de coupe XI-XI présenté Figure 3.

Les dessins annexés pourront non seulement servir à compléter l'invention mais aussi contribuer à sa définition, le cas échéant.

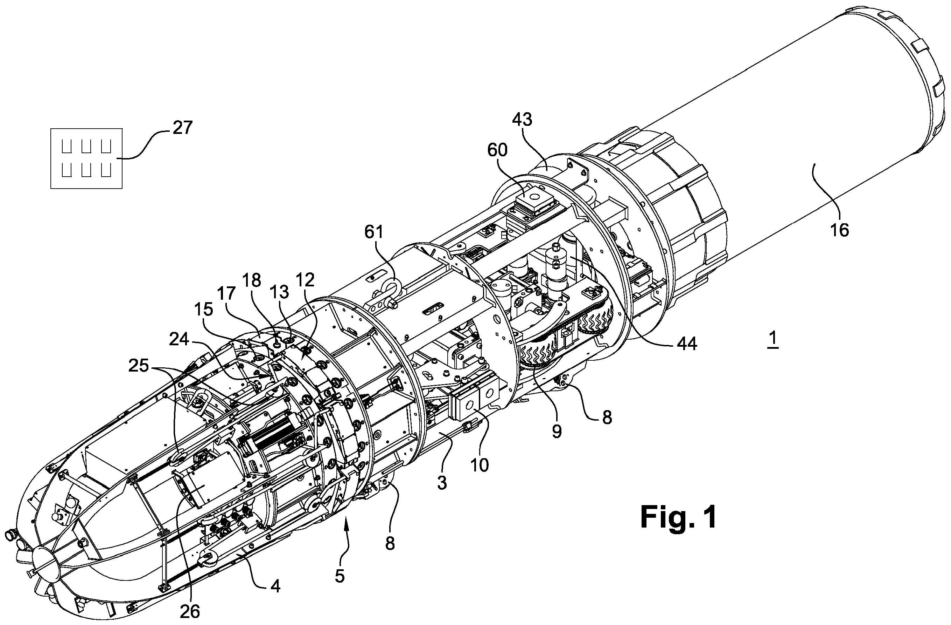

La figure 1 représente un dispositif intérieur 1 selon l'invention. Le dispositif 1 comporte un châssis 2, ledit châssis 2 comprenant un châssis avant 4 et un châssis arrière 3 reliés par un support 5 du dispositif 1. En fonctionnement, le châssis arrière 3 est disposé à l'intérieur du premier tube 6. Le premier tube 6 comporte une extrémité distale 7 à souder à un deuxième tube, non représenté. Avant l'amenée du deuxième tube, le châssis avant 4 forme une partie proéminente dépassant du premier tube.

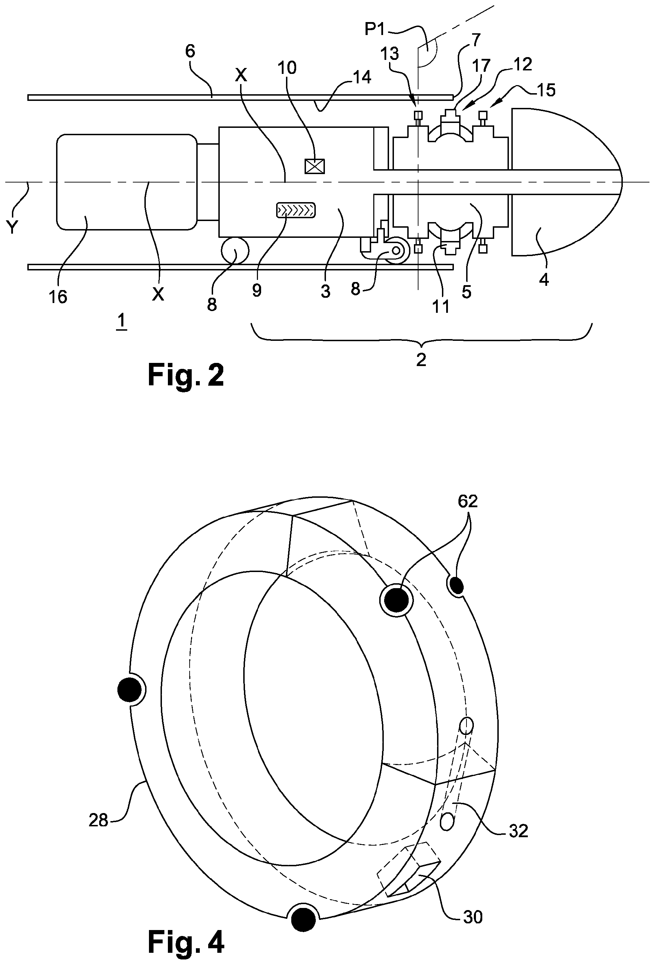

Pour mettre en place le dispositif 1 dans le premier tube, le châssis arrière 3 comporte des moyens de déplacement pour être déplacé à l'intérieur du tube. Les moyens de déplacement comportent des roues porteuses 8, des roues motrices 9 et des freins 10, mieux identifiés sur la Figure 2. Les roues porteuses 8 supportent le poids du dispositif 1, tandis que les roues motrices disposées latéralement de part et d'autre du dispositif ne supportent pas un tel poids.

Les moyens de déplacement permettent d'ajuster le parallélisme entre l'axe longitudinal Y du premier tube et l'axe longitudinal X du dispositif 1. Ces roues porteuses 8 permettent un déplacement à la fois axial et radial du dispositif à l'intérieur du premier tube. Les freins 10 peuvent venir en contact latéral avec le tube. Pour venir en contact avec le sommet et le fond du tube, le dispositif comporte des patins de contre appui 60 diamétralement opposés, afin d'aider au centrage intérieur du dispositif dans le tube. Ces patins de contre appui sont notamment utiles lors de l'introduction du dispositif 1 dans un tube, lorsque le dispositif 1 est soulevé et tenu par l'anneau de levage 61.

Le dispositif 1 comporte une couronne 11 munie d'une tête de soudage 12. La couronne est montée mobile autour du support 5. L'objectif de mise en place du dispositif 1 dans le premier tube est de placer la couronne dans le plan de joint, et que la tête de soudage pointe un bord de l'extrémité distale 7. La tête de soudage est notamment alimentée par un générateur de puissance situé à l'extérieur du tube, une connectique entre la tête de soudage et le générateur de puissance passant par le châssis avant 4.

En effet, une fois le cordon de soudure réalisé, le dispositif est ensuite commandé pour avancer jusqu'à la nouvelle extrémité libre d'un tube nouvellement raccordé au premier tube. Les roues sont ajustées de manière à garantir une trajectoire rectiligne du dispositif dans le tube. Les freins 10 sont ajustables au diamètre intérieur du tube.

La partie proéminente du châssis avant a une forme oblongue sensiblement en forme de cône arrondi au sommet. Le châssis avant 4 forme un repère visuel et facilite l'alignement du deuxième tube, tout en tolérant un glissement de ce deuxième tube sur sa surface extérieure.

Pendant l'amenée du deuxième tube, il est nécessaire d'immobiliser le dispositif 1 dans le premier tube. A cette fin, le support 5 comporte un premier dispositif de serrage 13 destiné à coopérer radialement avec la paroi intérieure 14 du premier tube. Lorsque le deuxième tube est amené en vis-à-vis du premier tube, et avant la mise en oeuvre de la tête de soudage, un deuxième dispositif de serrage 15 du support 5 est prévu pour coopérer radialement avec une paroi intérieure de ce deuxième tube.

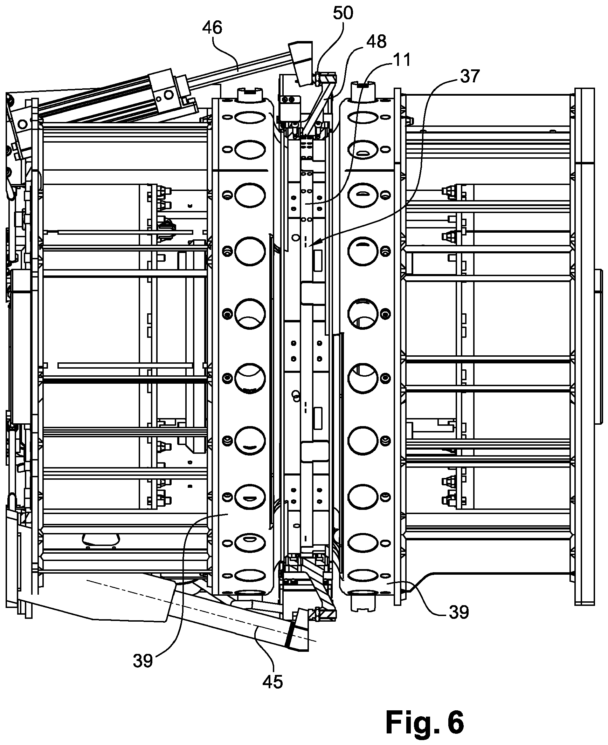

Le premier moyen de serrage 13 comporte dans l'exemple un vérin, un moyeu poussé par le vérin et des pistons portés par le moyeu et radialement répartis relativement à l'axe longitudinal X, de manière à ce que la poussée du vérin permette la mise en contact des pistons avec la surface intérieure 14. La Figure 1 montre une partie seulement des moyens de serrage, en effet, sur cette vue, les pistons n'y sont pas présentés pourvus de leur tête de piston. Pour être opérationnel, chaque piston est surmonté d'une tête de piston qui porte un galet mobile en rotation autour d'un axe solidaire du piston. Sur la Figure 1, les pistons dépourvus de tête de piston sont montrés en position rétractée, tandis que sur la Figure 6, où deux pistons radialement opposés sont représentés pour chacun des moyens de serrage 13 et 15, les pistons - là aussi dépourvus de leur tête de piston - sont représentés en position sortie.

Par exemple, le jeu comporte 24 pistons, de préférence équirépartis, pour créer des points de contact respectivement diamétralement opposés. Le vérin est alimenté par une réserve d'air comprimé 16 portée à l'arrière du châssis arrière 3. Le deuxième moyen de serrage 15 est dans l'exemple de configuration similaire au premier moyen de serrage 13.

Le dispositif 1 comporte des moyens de commande indépendant pour commander indépendamment le premier moyen de serrage 13 et le deuxième moyen de serrage 15 pour leur mise en coopération respective avec les parois intérieures des tubes. Les moyens de serrage 13, 15 peuvent être déployés de manière asynchrone. Ainsi, le deuxième moyen de serrage 15 peut venir au contact de la paroi intérieure d'un deuxième tube, alors que le premier moyen de serrage 13 coopère déjà avec la surface intérieure 14.

Le dispositif 1 selon l'invention comporte également un pupitre à distance 27 de l'appareil placé dans le tube. Ce pupitre 27 télécommande les moyens de déplacement du dispositif dans le tube, ainsi que les moyens de serrage 13 et 15.

La couronne 11 est montée rotative autour du support 5, entre les deux moyens de serrage 13 et 15. Le châssis avant 4 comporte un automate 26 de commande du cycle de soudage. L'automate 26 est alimenté en énergie par une batterie embarquée 43 disposée à l'arrière du châssis arrière 3.L'automate 26 peut être télécommandé par un deuxième pupitre situé en amont du deuxième tube. L'automate 26 peut comporter une interface de commande pour permettre le lancement de tests préparatoires à la réalisation du cordon de soudure.

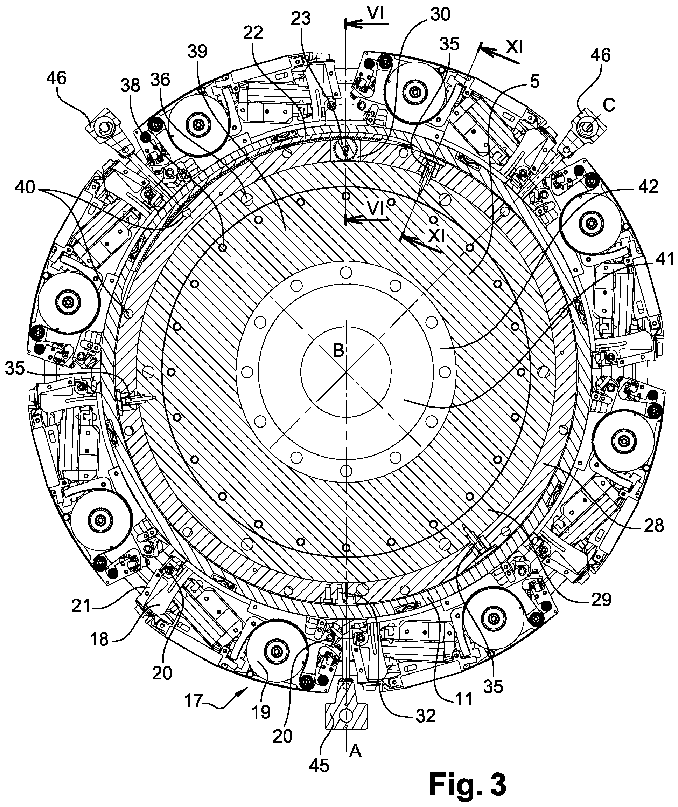

La tête de soudage 12 comporte plusieurs cassettes de soudage 17. Dans l'exemple de la figure 3, la couronne porte 8 cassettes telles que 17, ici toutes identiques, formant ensemble la tête de soudage 12. Les 8 cassettes sont de taille telle qu'elle recouvre sensiblement toute la circonférence de la couronne 11. Ainsi chaque cassette permet d'assurer un arc angulaire du cordon de soudure à réaliser.

La cassette recouvre un arc angulaire de la couronne 11. La cassette comporte une torche 18 pointant radialement vers un des bords dudit arc angulaire. La torche 18 est par exemple du type MIG ou TIG. De préférence, la torche est oscillante de manière à osciller le long de l'axe longitudinal X, et ainsi permettre la réalisation d'un cordon plus large que le diamètre du fil dévidé dans la torche. Chaque cassette comporte une bobine 19 de fil embarquée pour alimenter sa torche.

L'alimentation en puissance des torches se fait pour chaque cassette via un ombilic 24 dont la trajectoire est encadrée par un mécanisme 25 à poulies et enrouleurs porté par le châssis avant 4. Les câbles pour alimenter en puissance les torches 18 arrivent au niveau du châssis avant 4 depuis le deuxième pupitre. Du gaz d'inertage nécessaire aux opérations de soudage est stocké dans un réservoir tampon 44 disposé à l'arrière du châssis arrière 3. La réalimentation du réservoir tampon 44 en gaz d'inertage se fait au moyen de conduits provenant également du deuxième pupitre, via un arbre creux central. Enfin l'air comprimé nécessaire à la mise en oeuvre du vérin relié aux pistons est également approvisionné depuis ce deuxième pupitre.

La cassette 17 forme un boîtier monté de manière amovible sur la couronne 11. Il n'ya ainsi pas de perte de temps lorsqu'il est nécessaire de renouveler la bobine ou la torche. De plus, la cassette comporte des moyens de réglages 20 latéraux de la position de la cassette sur la couronne, afin de permettre un ajustement de la coplanarité des torches présentées par chacune des cassettes dans un même plan de joint. Par exemple, cet ajustement permet une variation de plus ou moins 2 mm de part et d'autre d'une position centrale.

De préférence, chaque torche pointe radialement vers l'extérieur. Mais un moyen d'inclinaison 21 de la torche est fourni sur la cassette. Il est ainsi possible d'avoir une incidence légèrement distincte de la perpendiculaire à la tangente au point d'impact, tout en continuant à proposer une amenée du fil à souder dans le plan de joint.

En pratique, la couronne 11 est entraînée en rotation dans un premier sens, par exemple horaire, et les 4 torches des 4 cassettes d'un même côté sont activées, afin de couvrir la moitié de la circonférence à souder. Ensuite la tête de soudage est entraînée en rotation en sens opposé, par exemple le sens antihoraire, pour que les 4 autres torches réalisent la soudure sur l'autre moitié de la circonférence à souder. Ainsi le besoin de rotation de la tête de soudage est limité. Dans un cas à 8 torches, chaque torche doit assurer un cordon de soudure de minimum d'un huitième de circonférence. Pour la sécurité des raccords, les cordons de soudure couvrent plus que le minimum requis afin de prévoir une zone de recouvrement avec au moins l'un des cordons adjacents dans le sens horaire ou antihoraire, par exemple de l'ordre de 10°.

Pour optimiser la cinématique, toutes les torches 18 sont très exactement equiréparties sur la circonférence de la couronne 11. Le besoin de déplacement dans une configuration à 8 torches est de l'ordre de 75°. Pour assurer cet entraînement en rotation, un secteur denté 22 est rapporté à l'intérieur de la couronne 11 pour coopérer avec un pignon denté motorisé 23.

Selon de l'invention, la couronne est rotulée pour pouvoir être inclinée par rapport à un plan P1 défini par les points de contact des pistons du premier moyen de serrage 13. La rotule forme un pivot. La rotule est ici représentée par la coopération entre une rotule femelle 28 et une rotule mâle 29.

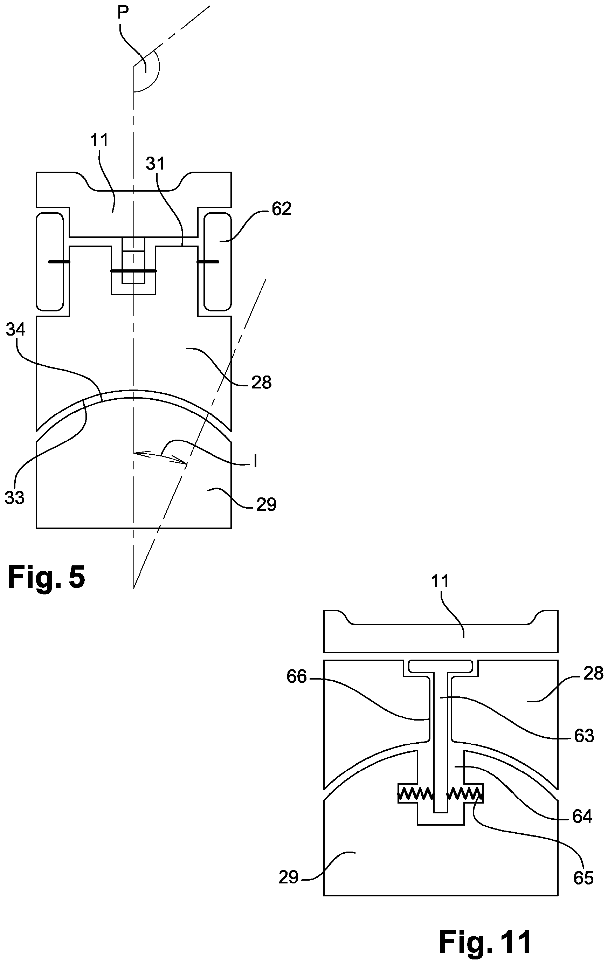

La couronne 11 est retenue autour de la rotule femelle 28. Cette rotule femelle 28 comporte un logement 30 débouchant radialement vers l'extérieur, où est disposé le pignon denté motorisé 23. La couronne 11 est mobile en rotation atour de cette rotule femelle 28. Des galets de roulement 62, Figures 4 et 5, sont prévus pour faciliter le glissement lors de la rotation du pourtour radialement extérieur 31 de la rotule femelle 28 sur le pourtour radialement intérieur de la couronne 11. Les galets de roulement 62 peuvent être portés par des axes longitudinaux, chaque axe étant disposé dans un alésage 40 correspondant de la rotule femelle 28.

La rotule mâle 29 prend la forme d'une bague fermée rapportée à l'intérieur de la rotule femelle 28 formant un anneau ouvert. Figure 4, l'anneau ouvert de la rotule femelle 28 peut être fermé et ajusté autour de la rotule mâle 29 via un mécanisme de verrouillage 32. Le pourtour radialement intérieur 33 de la rotule femelle 28 est concave. De manière complémentaire, le pourtour radialement extérieur 34 de la rotule mâle 29 présente une convexité complémentaire de la concavité.

La rotule mâle 29 comporte des limiteurs angulaires 35, Figures 3 et 11, qui limitent l'inclinaison que peut prendre la rotule femelle 28 relativement la rotule mâle 29. L'inclinaison I de la rotule tolère jusqu'à 0,5° ou 10 mm mesuré axialement le long de l'axe X. Dans l'exemple, il y a 3 limiteurs angulaires avant 35. En particulier, un limiteur angulaire 35 est obtenu par la coopération entre une extrémité d'un picot 63 monté radialement au travers d'un alésage 66 de la rotule femelle 28 pour s'engager dans un creux 64 formé dans le pourtour radialement extérieur de la rotule mâle. Le creux 64 est plus large que le picot 63 afin d'autoriser un certain débattement angulaire en inclinaison. Du fait de ce débattement possible, pour permettre un centrage de la rotule femelle 28 sur la rotule mâle, la rotule mâle comporte des ressorts de maintien latéraux 65, orientés transversalement au plan de la rotule, à l'intérieur du creux 64.

Ainsi en plus de pouvoir être entraînée en rotation autour de l'axe longitudinal X, la tête de soudage bénéficie d'un degré de liberté en inclinaison par rapport à cet axe longitudinal X du dispositif.

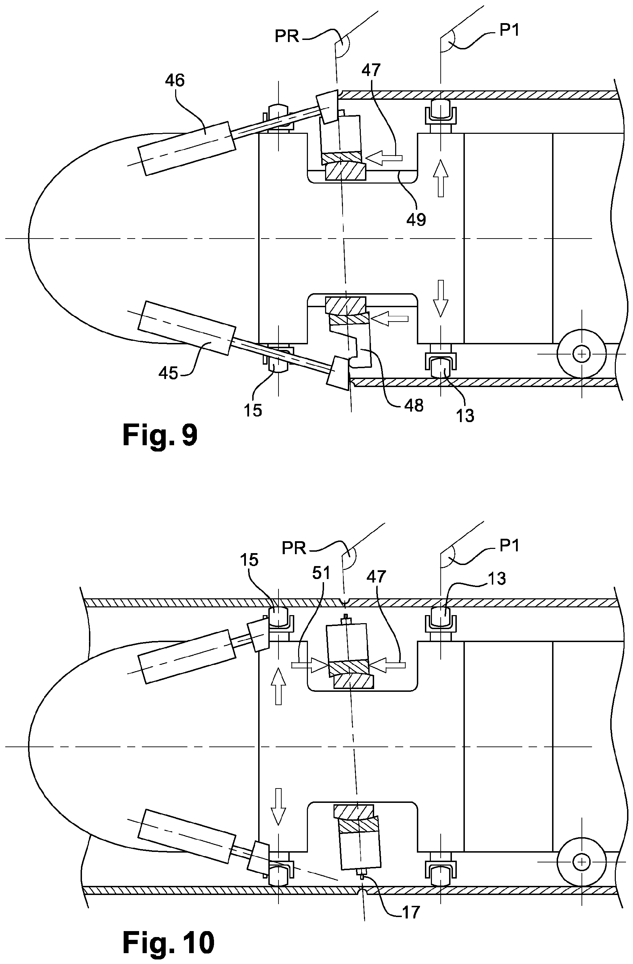

La rotule est conçue de sorte à pouvoir être déplaçable en translation le long de l'axe X. la rotule mâle est montée à coulisse autour du support 5. La rotule mâle 29 comporte plusieurs alésages 36 pour des barres de coulisse 49 permettant d'ajuster la position axiale le long de l'axe X, de la couronne 11 entre les deux dispositifs de serrage se déployant à la périphérie du support 5. Dans une position dite de « garage », la rotule et la couronne sont repoussés axialement à l'arrière d'un logement annulaire 37 formé par deux flasques 39 jointes du support 5. Les deux flasques 39 délimitent un élément dénommé « spider » en anglais. Dans la position de « garage », comme par exemple sur la Figure 9, la couronne 11 est à proximité du plan P1.

Le support 5 comporte des alésages 38 formés dans le flasque 39 pour être rigidifiés par des tirants axiaux, les tirants axiaux reliant les deux flasques entre eux. Le support 5 comporte un arbre creux central 41 retenu par des collerettes axiales 42 sur les flasques 39. L'arbre creux central permet d'augmenter la rigidité à la flexion. Le diamètre interne de l'arbre creux est par exemple de 150 mm.

La mise en oeuvre d'un dispositif selon l'invention va être détaillée dans le déroulé qui va être donné ci-dessous.

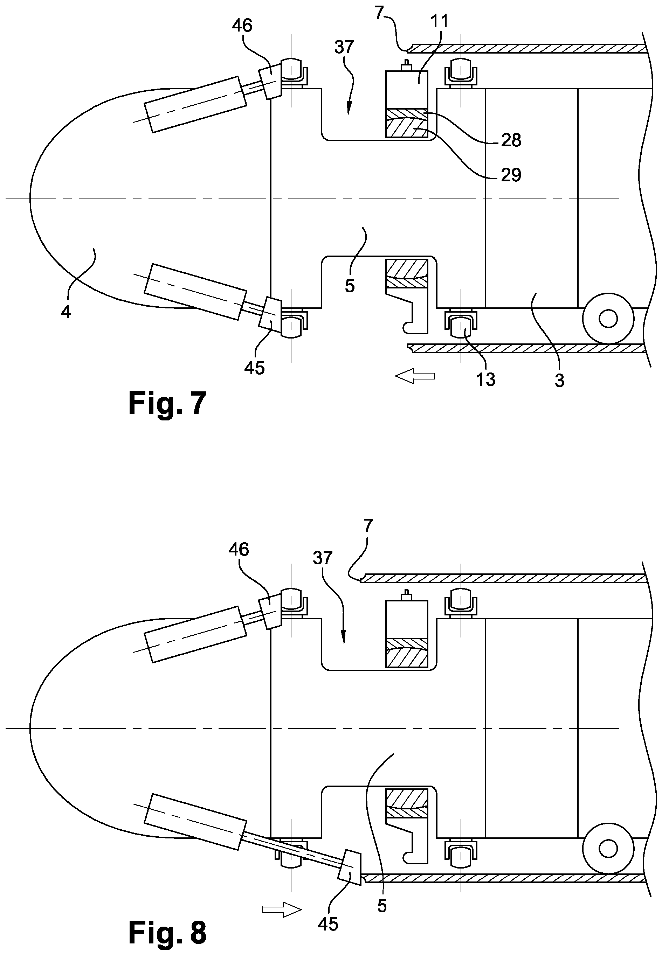

A la figure 7, le dispositif 1 est représenté dans le premier tube en train d'avancer jusqu'à atteindre une position où le châssis avant 4 émerge suffisamment du premier tube pour pouvoir déployer une béquille basse 45 du châssis avant 4. Une première étape consiste à ajuster la position axiale du dispositif 1 dans le tube de manière à amener la béquille 45 déployée au contact du chanfrein de l'extrémité distale 7. Lorsque la béquille 45 entre en contact, un opérateur peut décider via le pupitre 27 de stopper le recul du dispositif dans le tube. Le premier dispositif de serrage 13 est alors mis en place afin d'immobiliser axialement la position du dispositif 1 dans le tube à la fin de cette deuxième étape. A la fin de la deuxième étape, le plan P1 est défini. Pendant la première et la deuxième étape, la couronne 11 porteuse de la tête de soudage 12 est dans la position de « garage » en retrait dans son logement 37.

Dans une troisième étape, Figure 9, il y a création du référentiel plan de l'extrémité distale 7 du tube. En effet deux butées hautes télescopiques 46, montées sur le châssis avant 4, sont déployées jusqu'à venir également en contact avec le chanfrein de l'extrémité distale 7. Trois points suffisant à définir un plan, la béquille 45 et les deux butées hautes 46 forment le moyen d'identification selon l'invention et définissent le plan de référence PR de l'extrémité distale 7. Le plan PR peut être incliné par rapport au plan P1. Et comme cela est représenté sur la Figure 9, il y a ensuite indexation du plan de la couronne sur le plan PR. A cet effet, la couronne 11 est translatées le long des barres de coulisses 49 via des vérins pousseur 47, de préférence 3 vérins pousseurs arrière 47 équirépartis en appui latéral sur la rotule femelle 28. L'appui sur la rotule femelle 28 se transmet en coulisse de la rotule mâle 29 sur les barres de coulisses 49. La position finale de la couronne 11 est déterminée par la mise en contact de doigts indexeurs 48 portés par la couronne 11 avec la béquille 45 et les deux butées hautes 46. Dans l'exemple représenté, la couronne porte 3 doigts indexeurs tels que 48. Les vérins pousseurs arrière 47 ajustent leur poussée afin que les 3 doigts indexeurs 48 soient mis dans le plan de référence PR. L'accostage est contrôlé mécaniquement.

Le plan des doigts indexeurs 48 est réglé pour coïncider avec le plan des torches. Pour aider l'identité entre le plan des doigts indexeur 48 et celui des torches, les doigts indexeurs sont réglables axialement et indépendamment les uns des autres via des dispositifs 50 à vis et contre écrou.

La position et l'ajustement du plan des torches sur le plan de référence PR étant réalisé, la position de la couronne 11 est alors immobilisée par des vérins pousseurs avant 51. Il s'agit de préférence de préférence 3 vérins pousseurs avant 51 équirépartis en appui latéral sur la rotule femelle 28. Ces vérins pousseurs avant et arrière forment un dispositif de blocage en position longitudinale et inclinée de la couronne 11 relativement au plan P1.

Dans une quatrième étape, pour l'amenée du deuxième tube, Figure 10, la béquille 45 et les deux butées hautes sont ramenées contre le châssis avant 4. Lorsque la position du deuxième tube relativement au dispositif est optimisé en terme de rapprochement au regard d'indicateur externe, le deuxième moyen de serrage est mis en place pour immobiliser le deuxième tube en regard du premier tube. Par ailleurs, la poussée exercée par le deuxième moyen de serrage étant forte, elle permet de recirculariser le deuxième tube afin qu'il se conforme au mieux relativement au premier tube, lui-même tenu par le premier moyen de serrage.

Enfin lorsque les opérations de serrage et mise en regard sont optimisées, la couronne 11 portant les cassettes de soudage peut alors être mise en rotation pour exécuter le cordon de soudure.

## Revendications

1. - Dispositif (1) intérieur de serrage et de soudage pour la jonction de tubes (6) par leurs extrémités distales (7), le dispositif comportant
- un support (5) comportant un premier moyen de serrage (13) pour coopérer avec la surface intérieure (14) d'un premier tube, et un deuxième moyen de serrage (15) pour coopérer avec la surface intérieure d'un deuxième tube,
- une tête de soudage (12) montée mobile en rotation autour du support, de manière à permettre une soudure sur au moins une portion de circonférence interne d'une zone de jonction formée entre le premier tube et le deuxième tube;
**caractérisé en ce que** le dispositif comporte en outre
- un pivot (28, 29) tel que la tête de soudage est inclinable par rapport à l'axe longitudinal (X) du dispositif,
- le pivot étant tel que la tête de soudage est entraînée en rotation dans un plan inclinable (PR) par rapport à un plan de serrage (P1) du premier moyen de serrage.

2. - Dispositif selon la revendication 1 **caractérisé en ce que** le pivot est mobile axialement (49) entre les deux moyens de serrage.

3. - Dispositif selon la revendication 1 ou 2 **caractérisé en ce que** la torche de soudage est une torche de soudage à l'arc avec un fil électrode à dévidage continu et une électrode animée d'un mouvement d'oscillation de part et d'autre du plan inclinable.

4. - Dispositif selon l'une quelconque des revendications précédentes **caractérisé en ce que** la tête de soudage comporte plusieurs, en particulier au moins quatre, et par exemple huit, cassettes de soudage distinctes, chaque cassette pouvant exécuter un programme de soudage propre.

5. - Dispositif selon la revendication précédente **caractérisé en ce qu'**il comporte une unique motorisation pour entraîner l'ensemble des cassettes de la tête de soudage.

6. - Dispositif selon l'une quelconque des revendications précédentes **caractérisé en ce que** le pivot est obtenu par la coopération entre une rotule femelle (28) et une rotule mâle (29), la rotule femelle étant reliée à une couronne (11) de la tête de soudage, cette rotule femelle étant en coopération de forme avec une rotule mâle (29) du support.

7. - Dispositif selon la revendication précédente **caractérisé en ce que** la couronne comporte un moyen d'engrènement (22) sur une portion seulement de sa circonférence intérieure pour coopérer avec un pignon denté (23) porté par la rotule femelle.

8. - Dispositif selon l'une quelconque des revendications 1 à 5 **caractérisé en ce que** le pivot est obtenu par un hexapode.

9. - Dispositif selon l'une quelconque des revendications précédentes **caractérisé en ce qu'**il comporte des moyens d'identification (45, 46) de l'inclinaison d'un plan défini par l'extrémité distale du premier tube.

10. - Dispositif selon la revendication précédente **caractérisé en ce qu'**il comporte des moyens d'indexation (48) de l'inclinaison de la tête de soudage relativement à un plan d'inclinaison de l'extrémité distale du premier tube, les moyens d'indexation pouvant coopérer notamment par butée sur les moyens d'identification de l'inclinaison.

11. - Dispositif selon la revendication 9 ou 10 **caractérisé en ce que** les moyens d'indexation (48) comportent des doigts indexeurs (48) portés par la couronne (11), ces doigts indexeurs pouvant être amenés au contact d'une béquille (45) et de butées hautes (46) des moyens d'identification de l'inclinaison.

12. - Dispositif selon la revendication 10 ou 11 **caractérisé en ce que** les moyens d'indexation comportent des moyens de blocage (47, 51) en position.

13. - Dispositif selon l'une quelconque des revendications précédentes **caractérisé en ce qu'**il comporte des moyens d'ajustement de la coaxialité du dispositif dans le premier tube.

14. - Dispositif selon l'une quelconque des revendications précédentes **caractérisé en ce que** chaque moyen de serrage comporte respectivement une pluralité de pistons, par exemple chacun 24 pistons, chaque piston pouvant exercer une poussée radiale supérieure à 10 tonnes, et par exemple de l'ordre de 15 tonnes.

15. - Dispositif selon l'une quelconque des revendications précédentes **caractérisé en ce que** les premiers et deuxièmes moyens de serrage sont espacés axialement le long de l'axe longitudinal des tubes de telle sorte qu'ils sont à moins de 400 mm, notamment à moins de 300 mm de distance axiale.

16. - Procédé de soudage au moyen d'un dispositif selon l'une quelconque des revendications précédentes **caractérisé en ce qu'**il comporte les étapes suivantes :
- insertion longitudinale du dispositif dans un premier tube,
- déploiement d'une béquille basse (45) d'un châssis avant (4) du dispositif afin de limiter l'insertion longitudinale dans le premier tube au moment où la béquille entre en contact avec une extrémité distale (7) de ce premier tube,
- mise en place des premiers moyens de serrage (13) pour figer axialement la position du dispositif dans le premier tube, le premier moyen de serrage s'étendant dans un plan P1,
- création d'un référentiel plan (PR) de l'extrémité distale (7) du premier tube grâce à la béquille et à deux butées hautes télescopiques (46) du châssis, les butées hautes téléscopiques étant déployées jusqu'à venir en contact avec l'extrémité distale (7),
- indexation du plan de la couronne portant la torche de soudage sur le référentiel plan (PR) par translation de la couronne (11) le long de barres de coulisses (49) et mise en contact de doigts indexeurs (48) portés par la couronne (11) avec la béquille (45) et les deux butées hautes (46),
- blocage en position longitudinale et inclinée de la couronne (11) relativement au plan P1.
- mise en place d'un deuxième tube en regard du premier tube
- soudure sur au moins une portion de circonférence interne d'une zone de jonction formée entre le premier tube et le deuxième tube.

17. - Procédé de soudage selon la revendication précédente, **caractérisé en ce que** la translation de la couronne est obtenue par des appuis latéraux sur la rotule femelle (28) entraînant une coulisse de la rotule mâle (29) sur les barres de coulisses.

18. - Procédé de soudage selon la revendication précédente, **caractérisé en ce qu'**après le blocage en position longitudinale et inclinée de la couronne (11) relativement au plan P1, et avant l'amenée du deuxième tube, la béquille et les deux butées hautes télescopiques sont rétractées dans le premier tube.

## Patentansprüche

1. Innere Klemm- und Schweißvorrichtung (1) zum Verbinden von Rohren (6) an ihren distalen Enden (7), wobei die Vorrichtung Folgendes aufweist:
- einen Träger (5) mit einem ersten Klemmmittel (13) zum Zusammenwirken mit der Innenfläche (14) eines ersten Rohrs und einem zweiten Klemmmittel (15) zum Zusammenwirken mit der Innenfläche eines zweiten Rohrs,
- einen Schweißkopf (12), der um den Träger drehbar montiert ist, um eine Schweißung an mindestens einem Innenumfangsabschnitt eines zwischen dem ersten Rohr und dem zweiten Rohr ausgebildeten Verbindungsbereichs zu ermöglichen;
**dadurch gekennzeichnet, dass** die Vorrichtung ferner Folgendes aufweist:
- ein Drehgelenk (28, 29), sodass der Schweißkopf in Bezug auf die Längsachse (X) der Vorrichtung neigbar ist,
- wobei das Drehgelenk derart ist, dass der Schweißkopf in einer in Bezug auf eine Klemmebene (P1) des ersten Klemmmittels neigbaren Ebene (PR) gedreht wird.

2. Vorrichtung nach Anspruch 1, **dadurch gekennzeichnet, dass** das Drehgelenk axial (49) zwischen den beiden Klemmmitteln beweglich ist.

3. Vorrichtung nach Anspruch 1 oder 2, **dadurch gekennzeichnet, dass** es sich bei dem Schweißbrenner um einen Lichtbogenschweißbrenner mit einer kontinuierlich abspulenden Drahtelektrode und einer Elektrode, die in eine oszillierende Bewegung auf beiden Seiten der neigbaren Ebene versetzt wird, handelt.

4. Vorrichtung nach einem der vorangehenden Ansprüche, **dadurch gekennzeichnet, dass** der Schweißkopf mehrere, insbesondere mindestens vier und beispielsweise acht separate Schweißkassetten aufweist, wobei jede Kassette ein eigenes Schweißprogramm ausführen kann.

5. Vorrichtung nach dem vorangehenden Anspruch **dadurch gekennzeichnet, dass** sie eine einzige Motorisierung für den Antrieb aller Kassetten des Schweißkopfs aufweist.

6. Vorrichtung nach einem der vorangehenden Ansprüche **dadurch gekennzeichnet, dass** das Drehgelenk durch das Zusammenwirken zwischen einem weiblichen Kugelgelenk (28) und einem männlichen Kugelgelenk (29) erhalten wird, wobei das weibliche Kugelgelenk mit einem Kranz (11) des Schweißkopfs verbunden ist, wobei das weibliche Kugelgelenk in Formzusammenwirkung mit einem männlichen Kugelgelenk (29) des Trägers steht.

7. Vorrichtung nach dem vorangehenden Anspruch, **dadurch gekennzeichnet, dass** der Kranz nur über einen Teil seines Innenumfangs ein Eingriffsmittel (22) zum Zusammenwirken mit einem durch das weibliche Kugelgelenk getragenen Zahnrad (23) aufweist.

8. Vorrichtung nach einem der Ansprüche 1 bis 5, **dadurch gekennzeichnet, dass** das Drehgelenk durch ein Hexapod erhalten wird.

9. Vorrichtung nach einem der vorangehenden Ansprüche **dadurch gekennzeichnet, dass** sie Mittel (45, 46) zur Identifizierung der Neigung einer durch das distale Ende des ersten Rohrs definierten Ebene aufweist.

10. Vorrichtung nach dem vorangehenden Anspruch **dadurch gekennzeichnet, dass** es Mittel (48) zur Indexierung der Neigung des Schweißkopfs relativ zu einer Neigungsebene des distalen Endes des ersten Rohrs aufweist, wobei die Indexierungsmittel insbesondere durch Anschlag an den Neigungsidentifizierungsmitteln zusammenwirken können.

11. Vorrichtung nach Anspruch 9 oder 10, **dadurch gekennzeichnet, dass** die Indexierungsmittel (48) Indexierungsfinger (48) aufweisen, die vom Kranz (11) getragen werden, wobei die Indexierungsfinger in Kontakt mit einer Stütze (45) und oberen Anschlägen (46) der Neigungsidentifizierungsmittel gebracht werden können.

12. Vorrichtung nach Anspruch 10 oder 11, **dadurch gekennzeichnet, dass** die Indexierungsmittel Positionsblockiermittel (47, 51) aufweisen.

13. Vorrichtung nach einem der vorangehenden Ansprüche, **dadurch gekennzeichnet, dass** sie Mittel zum Einstellen der Koaxialität der Vorrichtung im ersten Rohr aufweist.

14. Vorrichtung nach einem der vorangehenden Ansprüche, **dadurch gekennzeichnet, dass** jedes Klemmmittel jeweils eine Vielzahl von Kolben, beispielsweise jeweils 24 Kolben, aufweist, wobei jeder Kolben einen radialen Schub von mehr als 10 Tonnen und beispielsweise in der Größenordnung von 15 Tonnen ausüben kann.

15. Vorrichtung nach einem der vorangehenden Ansprüche, **dadurch gekennzeichnet, dass** die ersten und zweiten Klemmmittel entlang der Längsachse der Rohre so beabstandet sind, dass ihr Achsabstand weniger als 400 mm, insbesondere weniger als 300 mm, beträgt.

16. Verfahren zum Schweißen mit Hilfe einer Vorrichtung nach einem der vorangehenden Ansprüche, **dadurch gekennzeichnet, dass** es die folgenden Schritte aufweist:
- Längseinführen der Vorrichtung in ein erstes Rohr,
- Ausfahren einer unteren Stütze (45) eines vorderen Rahmens (4) der Vorrichtung, um die Längseinführung in das erste Rohr zu dem Zeitpunkt zu begrenzen, zu dem die Stütze mit einem distalen Ende (7) dieses ersten Rohrs in Kontakt kommt,
- Anordnen erster Klemmmittel (13), um die Position der Vorrichtung im ersten Rohr zu fixieren, wobei sich die ersten Klemmmittel in einer Ebene P1 erstrecken,
- Erzeugen eines ebenen Bezugssystems (PR) des distalen Endes (7) des ersten Rohrs durch die Stütze und zwei obere teleskopische Anschläge (46) des Rahmens, wobei die oberen teleskopischen Anschläge ausgefahren werden, bis sie mit dem distalen Ende (7) in Kontakt kommen,
- Indexieren der Ebene des den Schweißbrenner tragenden Kranzes auf dem ebenen Bezugssystem (PR) durch Verschieben des Kranzes (11) entlang von Gleitstangen (49) und Inkontaktbringen von durch den Kranz (11) getragenen Indexierungsfingern (48) mit der Stütze (45) und den beiden oberen Anschlägen (46),
- Blockieren des Kranzes (11) in längsgerichteter und geneigter Position relativ zur Ebene P1,
- Anordnen eines zweiten Rohrs gegenüber dem ersten Rohr,
- Schweißen an mindestens einem Innenumfangsabschnitt eines zwischen dem ersten Rohr und dem zweiten Rohr ausgebildeten Verbindungsbereichs.

17. Schweißverfahren nach dem vorangehenden Anspruch, **dadurch gekennzeichnet, dass** das Verschieben des Kranzes durch seitliche Abstützungen auf dem weiblichen Kugelgelenk (28) erreicht wird, die ein Gleiten des männlichen Kugelgelenks (29) auf den Gleitstangen bewirken.

18. Schweißverfahren nach dem vorangehenden Anspruch, **dadurch gekennzeichnet, dass** nach dem Blockieren des Kranzes (11) in einer längsgerichteten und geneigten Position relativ zur Ebene P1 und vor dem Zuführen des zweiten Rohrs die Stütze und die beiden oberen teleskopischen Anschläge in das erste Rohr eingezogen werden.

## Claims

1. Internal clamping and welding device (1) for joining tubes (6) via their distal ends (7), the device having
- a support (5) having a first clamping means (13) for cooperating with the inner surface (14) of a first tube, and a second clamping means (15) for cooperating with the inner surface of a second tube,
- a welding head (12) mounted so as to be able to move in rotation about the support, so as to allow welding on at least a portion of the internal circumference of a junction zone formed between the first tube and the second tube;
**characterized in that** the device also has
- a pivot (28, 29) such that the welding head is inclinable relative to the longitudinal axis (X) of the device,
- the pivot being such that the welding head is driven in rotation in a plane (PR) that is inclinable relative to a clamping plane (P1) of the first clamping means.

2. Device according to Claim 1, **characterized in that** the pivot is able to move axially (49) between the two clamping means.

3. Device according to Claim 1 or 2, **characterized in that** the welding torch is an arc welding torch with a continuously fed electrode wire and an electrode made to oscillate on either side of the inclinable plane.

4. Device according to any one of the preceding claims, **characterized in** the welding head has a plurality of, in particular at least four, and for example eight, separate welding cassettes, each cassette being able to execute its own welding programme.

5. Device according to the preceding claim, **characterized in that** it has a single drive means for driving all of the cassettes of the welding head.

6. Device according to any one of the preceding claims, **characterized in that** the pivot is obtained by the cooperation between a female ball joint (28) and a male ball joint (29), the female ball joint being connected to an annulus (11) of the welding head, this female ball joint being in shape cooperation with a male ball joint (29) of the support.

7. Device according to the preceding claim, **characterized in that** the annulus has a meshing means (22) on only a portion of its inner circumference, for cooperating with a toothed pinion (23) borne by the female ball joint.

8. Device according to any one of Claims 1 to 5, **characterized in that** the pivot is obtained via a hexapod.

9. Device according to any one of the preceding claims, **characterized in that** it has means (45, 46) for identifying the inclination of a plane defined by the distal end of the first tube.

10. Device according to the preceding claim, **characterized in that** it has means (48) for indexing the inclination of the welding head relative to a plane of inclination of the distal end of the first tube, the indexing means being able to cooperate in particular by abutment on the means for identifying the inclination.

11. Device according to Claim 9 or 10, **characterized in that** the indexing means (48) have indexing fingers (48) borne by the annulus (11), these indexing fingers being able to be brought into contact with a strut (45) and upper abutments (46) of the means for identifying the inclination.

12. Device according to Claim 10 or 11, **characterized in that** the indexing means have means (47, 51) for blocking in position.

13. Device according to any one of the preceding claims, **characterized in that** it has means for adjusting the coaxiality of the device in the first tube.

14. Device according to any one of the preceding claims, **characterized in that** each clamping means respectively has a plurality of pistons, for example 24 pistons each, each piston being able to exert a radial thrust of greater than 10 tonnes, and for example of the order of 15 tonnes.

15. Device according to any one of the preceding claims, **characterized in that** the first and second clamping means are spaced apart axially along the longitudinal axis of the tubes such that they are at an axial distance of less than 400 mm, in particular less than 300 mm.

16. Method for welding by means of a device according to any one of the preceding claims, **characterized in that** it involves the following steps:
- longitudinally inserting the device into a first tube,
- deploying a low strut (45) of a front chassis (4) of the device in order to limit the longitudinal insertion into the first tube when the strut comes into contact with a distal end (7) of this first tube,
- putting in place the first clamping means (13) so as to axially fix the position of the device in the first tube, the first clamping means extending in a plane P1,
- creating a planar frame of reference (PR) of the distal end (7) of the first tube by virtue of the strut and two telescopic upper abutments (46) of the chassis, the telescopic upper abutments being deployed until they come into contact with the distal end (7),
- indexing the plane of the annulus bearing the welding torch on the planar frame of reference (PR) by moving the annulus (11) in translation along slide bars (49) and bringing indexing fingers (48) borne by the annulus (11) into contact with the strut (45) and the two upper abutments (46),
- blocking the annulus (11) in the longitudinal and inclined position relative to the plane P1.
- putting in place a second tube facing the first tube
- welding on at least a portion of the internal circumference of a junction zone formed between the first tube and the second tube.

17. Welding method according to the preceding claim, **characterized in that** the translational movement of the annulus is obtained by lateral presses on the female ball joint (28) causing sliding of the male ball joint (29) on the slide bars.

18. Welding method according to the preceding claim, **characterized in that** after the blocking of the annulus (11) in the longitudinal and inclined position relative to the plane P1, and before the delivery of the second tube, the strut and the two telescopic upper abutments are retracted into the first tube.
